# EUROPEAN PATENT SPECIFICATION

(11) **EP 3 159 153 B1**
(45) Date of publication and mention of the grant of the patent: **26.09.2018**
(21) Application number: 16195015.9
(22) Date of filing: 21.10.2016
(51) Int. Cl.: B32B 3/26, A45C 5/02, A45C 5/03, A45C 5/14, B32B 27/08, B32B 27/36, B32B 1/02, B32B 3/30

(54) **COMPRESSION-RESISTANT BAND PANEL AND DRAW-BAR BOX**
DRUCKSTEIFES BANDPANEEL UND SCHUBLADENKASTEN
PANNEAU DE BANDE RÉSISTANT À LA COMPRESSION ET BOÎTIER DE BARRE D'ÉTIRAGE

(30) Priority: 22.10.2015 CN 201520818644 U
(43) Date of publication of application: 26.04.2017
(73) Proprietor: Xiamen City Spark Imp. & Exp. Co., Ltd., Xiamen (CN)
(72) Inventor: XU, Zhiqiang, XIAMEN (CN)
(74) Representative: Sun, Yiming

(56) References cited:
- WO-A2-01/94993
- CN-U- 204 599 644

## Description

### Technical field

The invention is related to a compression-resistant band panel and a draw-bar box.

### Background technology

The luggage is the indispensable tool for daily travel of people, especially the draw-bar box is very popular due to its convenient use. The luggage is usually prepared from ABS plastic, oxford fabric, PU leather, canvas, PVC material, the cattle hide, etc. Beside the great defect on the aspects, such as waterproof and protection properties, the soft material has the compression resistance and impact resistance inferior to those of the hard material, such as PVC and PBS; especially the objects in the box may be damaged easily as a result of rain, collision, etc. during long-term travel; while the luggage prepared from the hard material is relatively heavy and cannot be carried conveniently.

For this purpose, the invention is disclosed.

### Contents of the invention

In order to solve the problem that the material of the luggage does not resist compression and is not convenient to carry in the prior art, the invention discloses a new compression-resistant band panel which is especially suitable for preparation of the box body of the luggage.

The compression-resistant band panel is presented as a three-layer composite compression-resistant structure, comprising a base layer, a band layer covering the base layer and a membrane layer on the band layer; the strip-shaped protruding patterns which are arranged at interval are processed on an upper surface of the band layer; groove structures are formed among the adjacent protruding patterns; the width of the groove bottom, that is, the distance among the two adjacent protruding patterns is 0.2-2mm; the protruding patterns are 1-5mm wide; and the bottom of the groove is 0.3-2mm far from a top surface of the membrane layer covering the protruding patterns.

Preferably, the protruding patterns of the compression-resistant band panel are 2mm wide.

Preferably, in the compression-resistant band panel, the distance among the two adjacent protruding patterns is 0.5mm; and the bottom of the groove is 0.6mm far from the top surface of the membrane layer covering the protruding patterns.

Preferably, the compression-resistant band panel is prepared from the pure PC.

The invention also discloses a draw-bar box, comprising a draw-bar box body, a draw bar and rollers arranged on the draw-bar box body, wherein the draw-bar box is prepared from the above-mentioned compression-resistant band panel.

Preferably, the rollers of the draw-bar box are arranged on four corners at the bottom of the box body; the draw bar is composed of a draw bar body and a handle; a plane formed by the rollers is vertical to the plane formed by the draw bar body and the handle.

Preferably, the draw-bar box body comprises a box body and a box cover; doubled reverse zippers are taken as a moveable connection part of the box body and the box cover; a coded lock is arranged on the side of the box body fixedly; and the doubled reverse zippers after being zipped shall match with the coded lock to lock the draw-bar box.

Preferably, the rollers of the draw-bar box are universal wheels.

Compared with the prior art, the invention has following beneficial effects:
The strength of the compression-resistant band panel in the invention is 40% higher than that of the common ABS material, and the range of the temperature that the compression-resistant band panel can endure is from -40°Cto 130°C; and the three-layer composite compression-resistant structure is taken, therefore the wear resistance of the surface can be increased, and the mark left as a result of collision, etc. can be reduced. The panel has excellent resilience due to protruding patterns shall not be deformed although the draw-bar box is subjected to unexpected external pressure during shipment. The compression-resistant band panel not only has excellent mechanical performances, such as compression resistance, but has light weight; specifically the suitcase of the common dimensions is about 2.9kg, thus women or children with small strength can take the suitcase easily; and it is very convenient when people consign for shipment or take the vehicles with the suitcase.

### Description of figures

Figure 1 is the structure diagram of transverse profile of a compression-resistant band panel.
Figure 2 is the stereo diagram of the compression-resistant band panel.

### Drawing signs: 1. Base layer; 2. Band layer; 21. Protruding pattern; 22. Groove; 3. Membrane layer

### Definite embodiments

The following shall explain the invention by combining with the optimal specific embodiment in order to facilitate understanding the contents of the invention.

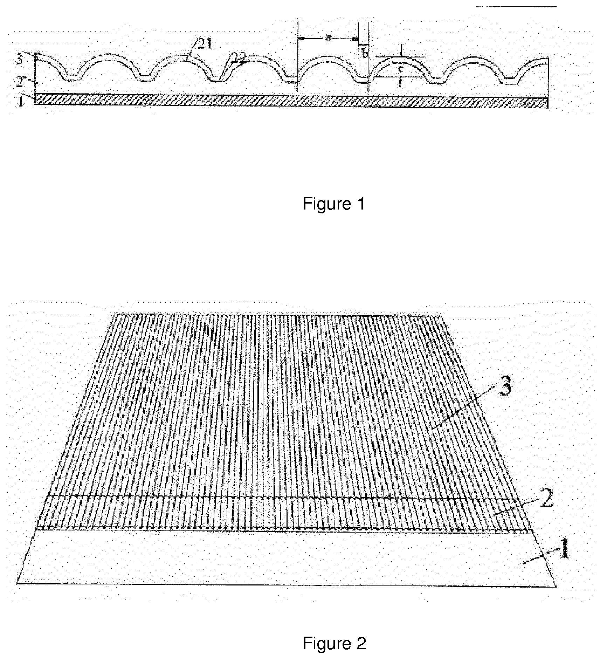

As shown in Figure 1 and Figure 2, the invention discloses a compression-resistant band panel which is presented as a three-layer composite compression-resistant structure; the three-layer structure is prepared from the pure PC (polycarbonate), wherein the compression-resistant band panel comprises a base layer 1, a band layer 2 covering the base layer and a membrane layer 3 on the band layer; the strip-shaped protruding patterns 21 which are arranged at interval are processed on an upper surface of the band layer 2; groove structures are formed among the adjacent protruding patterns 21; the widths a of the protruding patterns are 2mm; the width of the groove 22 bottom, that is, the distance b among the two adjacent protruding patterns 21 is 0.2-2mm; and the distance c from the bottom of the groove 22 to a top surface of the membrane layer covering the protruding patterns is 0.6m.

A draw-bar box (not marked in the figure) comprises a draw-bar box body, a draw bar arranged on the draw-bar box body and universal wheels; the draw-bar box body is prepared from the compression-resistant band panel. The draw-bar box body comprises a box body and a box cover; doubled reverse zippers are taken as a moveable connection part of the box body and the box cover; a coded lock is arranged on the side of the box body fixedly; and the doubled reverse zippers after being zipped shall match with the coded lock to lock the draw-bar box. The universal wheels are arranged on four corners at the bottom of the box body; the draw bar is composed of a draw bar body and a handle; a plane formed by the rollers is vertical to the plane formed by the draw bar body and the handle. Moreover, the universal wheels can be designed as the internal universal wheels or the external universal wheels.

Compared with the traditional draw-bar box prepared from the hard material, the draw-bar box is very light and has superior properties, such as compression resistance and wear resistance, as well as light weight, convenient and easy carrying because of the raw material -- the compression-resistant band panel, the unique three-layer composite compression-resistant structure and protruding patterns, and precise adjustment of parameters, such as the thickness, the width and the distance of the protruding patterns.

The above-mentioned is just the preferable execution mode of the invention; and it should be pointed that it can be improved and polished, and the specific parameters can be combined and optimized without breaking away from the principle of the invention by the common technician in this field, but all these shall belong to the protection scope of the invention.

## Claims

1. A compression-resistant band panel, wherein the compression-resistant band panel is presented as a three-layer composite compression-resistant structure, comprising a base layer, a band layer covering the base layer and a membrane layer on the band layer; strip-shaped protruding patterns which are arranged at interval are processed on an upper surface of the band layer; groove structures are formed among the adjacent protruding patterns; the width of the groove bottom, that is, the distance among the two adjacent protruding patterns is 0.2-2mm; the protruding patterns are 1-5mm wide; and the bottom of the groove is 0.3-2mm far from a top surface of the membrane layer covering the protruding patterns.

2. The compression-resistant band panel according to claim 1, wherein the protruding patterns are 2mm wide.

3. The compression-resistant band panel according to claim 2, wherein the distance among the two adjacent protruding patterns is 0.5mm; and the bottom of the groove is 0.6mm far from the top surface of the membrane layer covering the protruding patterns.

4. The compression-resistant band panel according to claim 1, wherein the band panel is prepared from the pure polycarbonate.

5. A draw-bar box, comprising a draw-bar box body, a draw bar and rollers arranged on the draw-bar box body, wherein the draw-bar box is prepared from the compression-resistant band panel according to any one of claims 1-4.

## Patentansprüche

1. Komprimierungsresistente Bandplatte, wobei die komprimierungsresistente Bandplatte als komprimierungsresistente Dreischichtverbundstruktur vorliegt, die Folgendes umfasst: eine Grundschicht, eine Bandschicht, die die Grundschicht bedeckt, und eine Membranschicht auf der Bandschicht; streifenartige, vorstehende Muster, die in Abständen angeordnet sind, sind auf einer oberen Oberfläche der Bandschicht verarbeitet; Rillenstrukturen sind unter den aneinander liegenden vorstehenden Mustern gebildet; die Breite des Rillenbodens, das heißt der Abstand zwischen den beiden aneinander liegenden vorstehenden Mustern, beträgt 0,2-2 mm; die vorstehenden Muster sind 1-5 mm breit; und der Boden der Rille ist 0,3-2 mm von einer oberen Oberfläche der Membranschicht, die die vorstehenden Muster bedeckt, entfernt.

2. Komprimierungsresistente Bandplatte nach Anspruch 1, wobei die vorstehenden Muster 2 mm breit sind.

3. Komprimierungsresistente Bandplatte nach Anspruch 2, wobei der Abstand zwischen den beiden aneinander liegenden vorstehenden Mustern 0,5 mm beträgt; und der Boden der Rille 0,6 mm von der oberen Oberfläche der Membranschicht, die die vorstehenden Muster bedeckt, entfernt ist.

4. Komprimierungsresistente Bandplatte nach Anspruch 1, wobei die Bandplatte aus reinem Polycarbonat hergestellt ist.

5. Zugstangenkoffer umfassend einen Zugstangenkofferkörper, eine Zugstange und Rollen, die an dem Zugstangenkofferkörper angeordnet sind, wobei der Zugstangenkoffer aus der komprimierungsresistenten Bandplatte nach irgendeinem der Ansprüche 1-4 hergestellt ist.

## Revendications

1. Panneau de bande résistant à la compression, dans lequel le panneau de bande résistant à la compression est présenté comme une structure résistante à la composition composite à trois couches, comprenant une couche de base, une couche de bande recouvrant la couche de base et une couche de membrane située sur la couche de bande ; des motifs faisant saillie en forme de bandes qui sont disposés à des intervalles sont traités sur une surface supérieure de la couche de bande ; des structures de rainure sont formées entre les motifs adjacents faisant saillie ; la largeur du fond de rainure, c'est-à-dire, la distance entre les deux motifs adjacents faisant saillie est comprise entre 0,2 et 2 mm ; les motifs faisant saillie ont une largeur comprise entre 1 et 5 mm ; et le fond de la rainure est éloigné entre 0,3 et 2 mm d'une surface supérieure de la couche de membrane recouvrant les motifs faisant saillie.

2. Panneau de bande résistant à la compression selon la revendication 1, dans lequel les motifs faisant saillie ont une largeur de 2 mm.

3. Panneau de bande résistant à la compression selon la revendication 2, dans lequel la distance entre les deux motifs adjacents faisant saillie est de 0,5 mm, et le fond de la rainure est éloigné de 0,6 mm d'une surface supérieure de la couche de membrane recouvrant les motifs faisant saillie.

4. Panneau de bande résistant à la compression selon la revendication 1, dans lequel le panneau de bande est préparé à partir de polycarbonate pur.

5. Boîtier de barre de traction, comprenant un corps de boîtier de barre de traction, une barre de traction et des rouleaux agencés sur le corps de boîtier de barre de traction, selon lequel le boîtier de barre de traction est préparé à partir du panneau de bande résistant à la compression selon l'une quelconque des revendications 1 à 4.
